# EUROPEAN PATENT APPLICATION

(11) **EP 0 863 477 A1**
(43) Date of publication of application: **09.09.1998**
(21) Application number: 98200264.4
(22) Date of filing: 29.01.1998
(51) Int. Cl.: G06K 13/08

(54) **Hybrid smart card/magnetic card reader device**

(30) Priority: 07.03.1997 IE 970165
(71) Applicant: Alps Electric (Ireland) Ltd., County Cork (IE)
(72) Inventor: McEvoy, David, Guilford GU1 2BL, Surry (GB); Mievis, August, 3440 Zoutleeuw (BE)
(74) Representative: Hanna, Peter William Derek

(57) **Abstract**

A hybrid smart card/magnetic card (3/5) reader device is disclosed, in particular for a computer peripheral device such as a computer keyboard (1), or an electronic point of sale (EPOS) device, such as a cash register. The reader device comprises first slot means (2) for reception of an inserted card, first read/write means for reading a magnetic stripe (4) if present on said inserted card, arranged within said first slot means, second slot means (9) arranged adjacent to the first slot means for reception of said inserted card, when moved between the first slot means and the second slot means, a second read/write means for accessing/transferring information stored in data storage or microprocessor means (6) embedded in said inserted card, if present in said card. Preferably, both the first and the second slot means include respective track means to limit the movement of the inserted card therein, such that a portion of the inserted card remains visible at all times when inserted fully into said slot means. The first slot means may comprise a "swipe" type slot adapted for manual advancement of an inserted card past the first read/write means, preferably a fixed magnetic read/write head positioned so as to read the entire length of the magnetic stripe of a magnetic card. The second slot means may be of the "letterbox" type and is preferably located in line with and adjacent to the first slot means, such that an inserted card may be advanced from the first slot to the second slot in one movement.

## Description

The present invention relates to a hybrid smart card/magnetic card reader device, in particular to a computer peripheral device such as a computer keyboard, or an electronic point of sale (EPOS) device, such as a cash register, which incorporates such a hybrid smart card/magnetic card reader device.

Transaction cards such as credit or debit cards, bank cards and identification cards, are still commonly in use with user name, account number, expiry date, etc. stored thereon on a magnetic stripe. Such cards are used in conjunction with a personal identification number (PIN) in which card data and the inputted PIN number are transferred to the bank's computer for verification of the PIN code on a database. However, banking and EPOS card systems are evolving rapidly towards a more secure, cashless, event-driven real time operating environment with the introduction of smart cards. Smart cards have an embedded memory chip or a memory and microprocessor chip capable of storing much more information than a magnetic card, which can readily be accessed (read from/written to/re-programmed) by a reader device, and with much higher levels of security than magnetic card systems. The stored data on a smart card is generally encrypted, and data may flow within the card itself. The increasing power of smart card chips is allowing more and more complex encrypting processes to be implemented.

For several years to come there will be a need to migrate from the magnetic card systems still widely in use to the more advanced smart card systems, before smart card systems eventually displace magnetic card systems. A need therefore exists for a reader device capable of reading both types of card. Such a migratory system aims to minimise the investment in new equipment, whilst retaining as much as possible of the original system investment.

In a present common banking operation, a bank customer presents his card for verification at a counter by first swiping his card through a slot, and then keying in his PIN number, at a special numeric keypad on the countertop. Both the keyed-in number and the PIN number encoded on the magnetic card are transferred to the bank's computer or a networked PC behind the counter, where a successful match indicates verification of the card. It is an object of the present invention to provide a system of card verification for both magnetic cards and smart cards providing a higher level of security than this, i.e., without any need to route the PIN information to the computer where it could temporarily be stored in memory and/or intercepted, and subsequently used for fraudulent purposes.

Existing magnetic card readers include a slot for card insertion of the "swipe" type or "letterbox" type, whilst existing smart card readers generally include a slot of the "letterbox" type, and both may include motorised means for gripping the card to advance it through the slot. Some motorised "letterbox" type readers, for example in automatic teller machines, draw the card completely into the slot temporarily out of view of the user.

It is a further object of the present invention to provide a hybrid smart card/magnetic card reader device in which either a smart card or a magnetic card may be inserted into a slot without any motorised means for advancing the card, which is both costly and prone to malfunction.

It is also very desirable in designing a manually-operated reader device, that the user performs one continuous card movement when the card is inserted with a view to successfully reading all the stored information on the card in one "pass".

It is also an object of the present invention to provide a hybrid smart card/magnetic card reader device which leaves the card, or a portion of the card always within the user's view, even when fully inserted. This is desirable from a psychological viewpoint, since smart cards may be used as a digital cash card, or may contain personal or confidential data, so that the user may not be comfortable if the card leaves his sight during the transaction cycle, or even during a simple verification procedure.

It is furthermore an object of the present invention to provide a card reader capable of reading data stored over the full length of all three tracks of the magnetic stripe on a magnetic card. Existing "letterbox" type magnetic card readers without motorised card advancement means are limited in this respect by the fact that the magnetic read head is physically located a short distance from the entrance to the slot, and that the card cannot be fully inserted anyway, if it is to be gripped by hand and manually withdrawn. There is an additional disadvantage if the read head is positioned close to the entrance of the slot in that there is a technical restriction to obtain the correct "entry speed" of the card into the slot.

It is also an object of the invention to provide a hybrid smart card/magnetic card reader device without special sensors or means for identifying the type of card which is inserted, i.e. whether it is a smart card or a magnetic card, as this will reduce parts and speed the transaction process.

Accordingly, the present invention provides a card reader device for reading stored information encoded on a magnetic stripe of a magnetic card, or stored information encoded in a microprocessor chip in a smart card, whichever is inserted into the device, comprising:
- first slot means for reception of an inserted card,
- first read/write means for reading a magnetic stripe if present on said inserted card, arranged within said first slot means,
- second slot means arranged adjacent to the first slot means for reception of said inserted card, when moved between the first slot means and the second slot means,
- a second read/write means for accessing/transferring information stored in data storage or microprocessor means embedded in said inserted card, if present in said card,
   whereby a single movement by the card holder of inserting the card and moving it across from the first slot means to the second slot means provides the action required for the device to read said stored information from the inserted card, whether stored thereon on a magnetic stripe or in a microprocessor chip.

Preferably, both the first and the second slot means include respective track means to limit the movement of the inserted card therein, such that a portion of the inserted card remains visible at all times when inserted fully into said slot means.

Preferably, the first slot means comprises a "swipe" type slot adapted for manual advancement of an inserted card past the first read/write means, preferably a fixed magnetic read/write head positioned so as to read the entire length of all tracks of the magnetic stripe of a magnetic card.

Preferably, the second slot means is of the "letterbox" type. Advantageously, the second slot means is located in line with, in the same plane, and adjacent to the first slot means, such that an inserted card may be advanced from the first slot to the second slot in one movement.

Preferably, the card reader of the present invention is embodied as an integral card reader device on a computer peripheral device such as a computer keyboard, or an electronic point-of-sale device such as a cash register.

Advantageously, a secure PIN verification method is provided wherein the hybrid smart card/magnetic card reader includes circuitry which may temporarily isolate the numeric keys of a computer keyboard from routing inputted PIN data to a computer connected to the reader, and provide for matching of the inputted PIN data to the PIN data stored on an inserted smart card locally within the reader itself, before returning to normal keyboard functionality.

Preferred embodiments of a hybrid smart card/magnetic card reader device in accordance with the invention will now be described with reference to the accompanying drawings, in which;
**Figure 1** is a schematic representation of a computer keyboard with an integral smart card/magnetic card reader in accordance with an embodiment of the present invention, when used, in a banking application,
**Figure 2** is a detail plan view, partly broken away, of the integral reader device shown in the keyboard in Figure 1,
**Figure 3** is a cross-sectional view when viewed on section line A-A in Figure 2,
**Figure 4** is a cross-sectional view when viewed on section line B-B in Figure 2,
**Figure 5** is a cross-sectional view when viewed on section line C-C in Figure 2,
**Figure 6** is a cross-sectional view when viewed on section line D-D in Figure 2,
**Figure 7** is an end view of the keyboard shown in Figures 1 to 6, and
**Figure 8** is a schematic diagram of a key switch matrix showing additional security aspects of the hybrid smart card/magnetic card reader of the present invention.

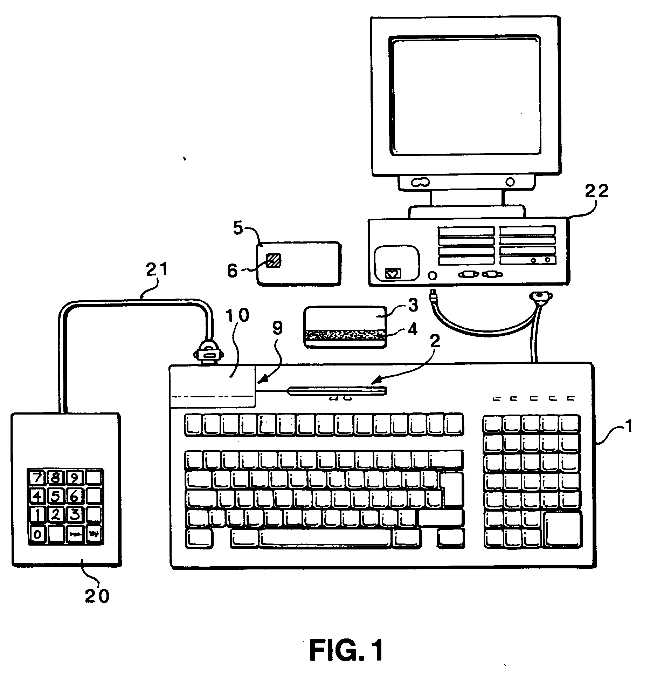

Referring to Figure 1 of the drawings, a hybrid smart card/magnetic card reader is incorporated as an integral part within the console of a computer keyboard 1 and comprises a first slot 2 for insertion of a magnetic card 3 which has a magnetic stripe 4 on one side thereon, or a smart card 5 having a silicon chip 6 embedded thereon, or a hybrid card with both a magnetic stripe 4 and a silicon chip 6.

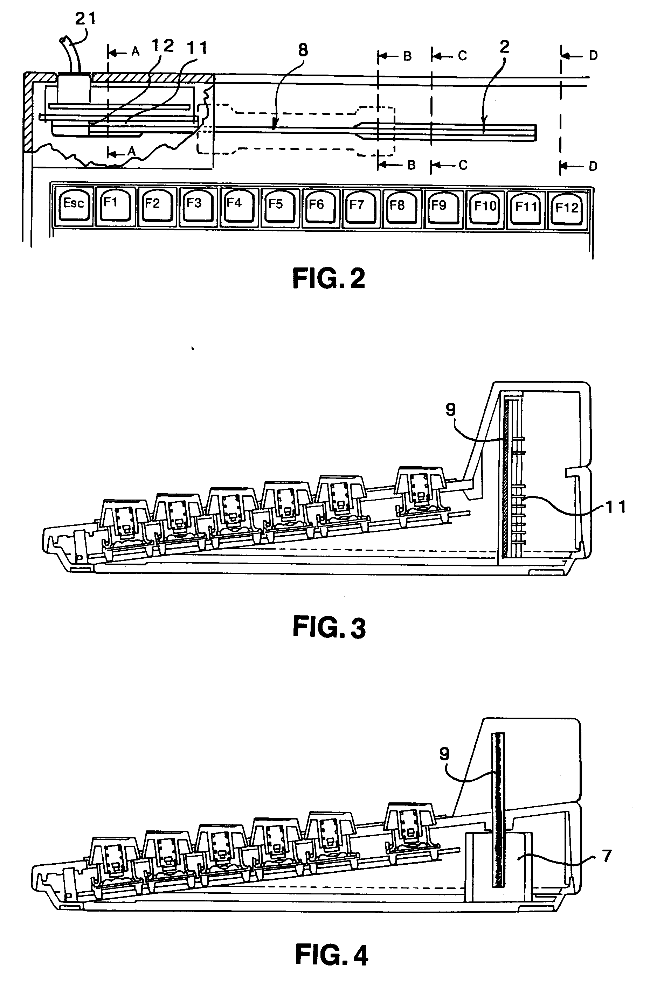

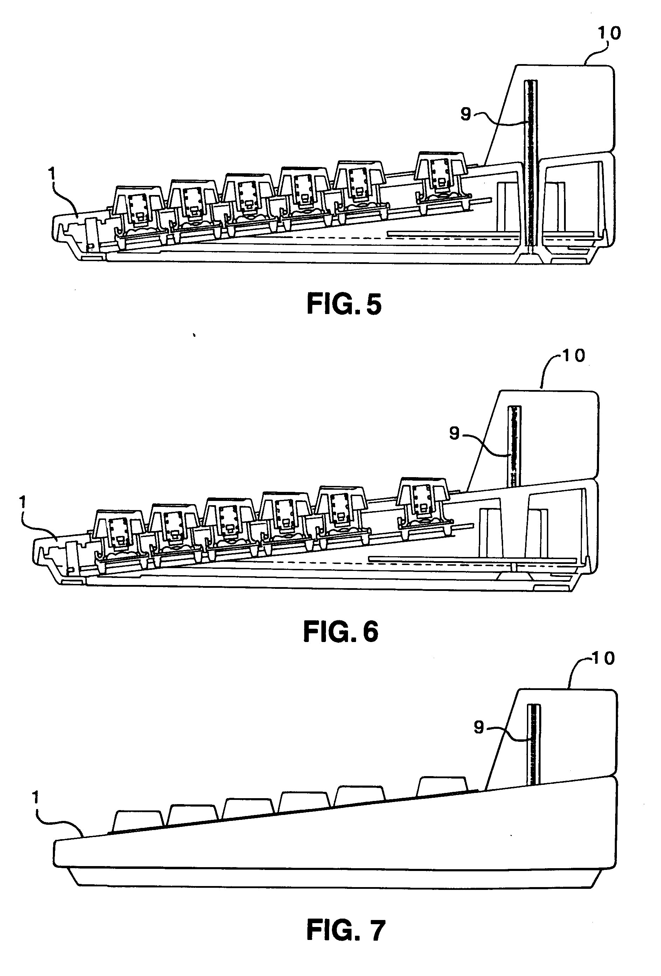

The slot 2 is of the "swipe" type and includes a chamfered lip portion for ease of insertion of a card. A read-write head 7 (see Figure 4) is included within the slot 2, and is positioned so that the full length of the magnetic stripe 4 of a magnetic card 3 inserted in the slot may be read by the head 7. The user is required to insert the card fully home into the slot at the right hand side thereof and swipe it past the head 7 towards the left hand side. In a continued movement to the left, as seen in Figure 1, the card is drawn through an intermediary slot portion 8 into the second slot 9, which is seen more clearly in Figures 3 to 7.

A raised portion 10 of the reader device defines the upright slot 9 and forms a receptacle for a smart card. The embedded chip or IC device 6 on a smart card 5 is located to one side of the smart card, and when inserted into the slot 9, the card comes to rest against an abutment member 12, such that the contacts 11 engage the contacts on the chip or IC device, in effect forming a read/write means for the smart card.

It should be noted that a portion of the smart card remains visible to the user when the card is fully inserted in the slot 9, and likewise the card cannot be fully inserted all the way into the slot 2 so that a portion of the card always remains in view to the user when swiped through the slot 2 into the slot 9.

It should also be noted that there are no sensors or other means for identifying whether a magnetic card 3 or a smart card 5 has been inserted in the reader device; all that is required is for the user to insert either type of card into the slot 2, swipe it along the slot and into the slot 9, such that in the process it will be read by either the head 7 or the contacts 11, depending on whether a magnetic stripe or embedded chip is present on the card, magnetic cards 3 and smart cards 5 being otherwise of exactly the same physical dimensions. Thus, a dual system is provided in which either a magnetic card or a smart card can be used, with the same facility.

Motorised means could be provided for advancing the card along the slot, but this is not necessary and manual operation of the device is preferred.

In another aspect of the invention, the hybrid smart card/magnetic card reader comprises a security module with an integrated smart card PIN code handling tool, preventing the need to replace any existing installed security systems. With reference again to Figure 1, when a smart card is used for client authentication in a banking application, the customer is required to key in his PIN number in a special countertop keypad 20, which is connected directly to the smart card receptacle 10 via lead 21, and not to the computer 22, as in present magnetic card reader systems. The security module circuitry is included locally in the keyboard console 1 and provides a high level of security in which a PIN code number inputted via the PIN keypad 20, may use a secure pass through channel for encrypted PIN data to the host computer, in the case of magnetic cards. However, in the case of smart cards, the PIN code data inputted via the PIN keypad 20 is routed directly to the smart card chip when located in the smart card receptacle 10. In the latter case, the PIN code data does not actually leave the keyboard during the verification process.

Alternatively, the numeric keys on the right hand side of the alphanumeric keyboard 1 may be used to input PIN code data, wherein the four by four matrix of numeric keys may be isolated from the host computer 22 during the inputting of PIN code data, such that the normal data entry functionality of the keyboard 1 is temporarily switched to a security mode for PIN code data entry using the numeric keys, which again enables matching of the inputted PIN code with the PIN codestored on the inserted card to be carried out locally within the keyboard itself.

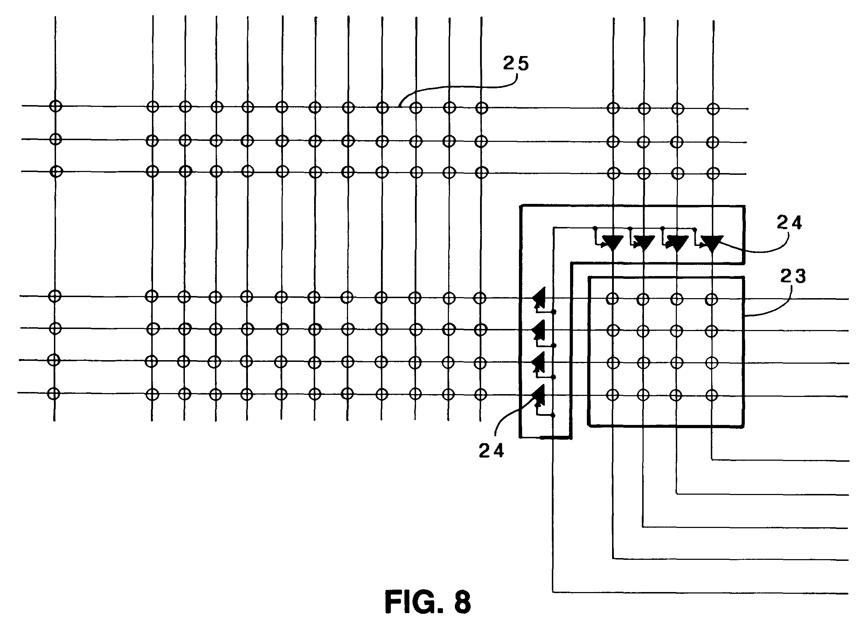

Figure 8 shows schematically an implementation of a section of the keyboard 1 wherein a four by four matrix 23 is isolated by means of switches 24, wherein the vertical lines represent the "drive lines" and the horizontal lines represent the "sense lines", the nodes representing the location of the keys, which are in effect switches. The four by four array of numeric keys 23 and the four by four array of numeric keys in the keypad 20 may share the same hardware, such that in the security mode for PIN code entry, the security module makes the "connect-enable-to-main-matrix" line inactive, the four by four array 23 of numeric keys is disconnected from the main matrix, and normal scanning of the array 23 via the drive and sense lines is transferred to the security module. The security module inputs the PIN code directly to the smart card chip located in the smart card receptacle. After completion of the PIN code entry cycle, a security microprocessor reconnects the four by four array 23 to the main matrix 25.

## Claims

1. A card reader device for reading stored information encoded on a magnetic stripe (4) of a magnetic card (3), or stored information encoded in data storage or microprocessor means (6) in a smart (5) card, whichever is inserted into the device, comprising:
- first slot means (2) for reception of an inserted card,
- first read/write means (7) for reading a magnetic stripe (4) if present on said inserted card, arranged within said first slot means,
- second slot means (9) arranged adjacent to the first slot means for reception of said inserted card, when moved between the first slot means and the second slot means,
- a second read/write means (11) for accessing/transferring information stored in data storage or microprocessor means (6) in said inserted card, if present in said card,
whereby a single movement by the card holder of inserting the card and moving it across from the first slot means to the second slot means provides the action required for the device to read said stored information from the inserted card, whether stored thereon on a magnetic stripe (4) or in data storage or microprocessor means (6).

2. A card reader device according to claim 1, in which both the first and the second slot means (29) include respective track means to limit the movement of the inserted card therein, such that a portion of the inserted card remains visible at all times when inserted fully into said slot means.

3. A card reader device according to claim 1 or claim 2, in which the first slot means comprises a "swipe" type slot defined by a channel (2, 8), adapted for manual or motor-assisted advancement of an inserted card past the first read/write means.

4. A card reader device according to claim 3, in which the first read/write means is a fixed magnetic read/write head (7) positioned so as to read the entire length of the magnetic stripe of a magnetic card.

5. A card reader device according to any of claims 1 to 4, in which the second slot means (9) is of the "letterbox" type.

6. A card reader device according to any of claims 1 to 5, in which the second slot means (9) is located in line with, in the same plane, and adjacent to the first slot means, whereby the inserted card may be advanced from the first slot to the second slot in one movement, coming to rest at least partially within said second slot.

7. A card reader device according to any claims 1 to 6, embodied as an integral card reader device in a computer keyboard (1), the keyboard housing (1, 10) defining said first and second slot means (2, 9).

8. A card reader device according to claim 7, wherein the computer keyboard (1) includes circuitry (24) which may temporarily isolate the numeric keys (23) of the keyboard from routing inputted Personal Identification Number (PIN) data to a computer connected to the reader, and means for matching of the inputted PIN data to the PIN data stored on an inserted smart card locally within the reader itself, before returning to normal keyboard functionality.

9. A card reader device according to any of claims 1 to 6, embodied as an integral card reader device in an electronic point-of-sale device such as a cash register, the housing of said point-of-sale device defining said first and second slot means (2,9).
